# EUROPÄISCHE PATENTSCHRIFT

(11) **EP 2 725 203 B1**
(45) Veröffentlichungstag und Bekanntmachung des Hinweises auf die Patenterteilung: **03.04.2019**
(21) Anmeldenummer: 12189548.6
(22) Anmeldetag: 23.10.2012
(51) Int. Cl.: F01D 25/12, F01D 25/14, F01D 25/24

(54) **Kühlluftführung in einer Gehäusestruktur einer Strömungsmaschine**
Cool air guide in a housing structure of a fluid flow engine
Conduite d'air froid dans une structure de boîtier d'une turbomachine

(43) Veröffentlichungstag der Anmeldung: 30.04.2014
(73) Patentinhaber: MTU Aero Engines AG, 80995 München (DE)
(72) Erfinder: Feldmann, Manfred, 82223 Eichenau (DE); Schinko, Norbert, 81373 München (DE); Eichler, Christian, 81245 München (DE); Kaltenbach, Sebastian, 80636 München (DE)

(56) Entgegenhaltungen:
- EP-A1- 0 134 186
- EP-A1- 0 356 305
- EP-A1- 0 618 349
- EP-A1- 2 696 036
- EP-A1- 2 719 869
- WO-A1-92/17686
- US-A- 4 053 254
- US-A- 4 242 042

## Beschreibung

### HINTERGRUND DER ERFINDUNG

### GEBIET DER ERFINDUNG

Die vorliegende Erfindung betrifft eine Gehäusestruktur für eine Strömungsmaschine, insbesondere eine stationäre Gasturbine oder ein Flugtriebwerk, die einen Strömungskanal, in dem Leit- und Laufschaufeln angeordnet sind, zumindest teilweise ringförmig umgibt.

### STAND DER TECHNIK

Bei Strömungsmaschinen, wie stationären Gasturbinen oder Flugtriebwerken, wird Luft entlang eines Strömungskanals angesaugt, verdichtet und in einer Brennkammer zusammen mit Brennstoff verbrannt, wobei anschließend die Verbrennungsgase über den Strömungskanal ausgestoßen werden, um dabei in einer Turbine Rotoren anzutreiben. Zur Führung des Strömungsfluids sind weiterhin im Strömungskanal Leitschaufeln angeordnet. Der Strömungskanal mit den Leit- und Laufschaufeln wird umlaufend von einer Gehäusestruktur umgeben, wobei die Gehäusestruktur nicht nur mechanischen Belastungen ausgesetzt ist, sondern insbesondere auch dafür sorgen muss, dass eine hohe Temperaturdifferenz zwischen dem Strömungsfluid im Strömungskanal und der Gehäuseaußenseite realisiert werden kann.

Zu diesem Zweck kann die Gehäusestruktur Hitzeschutzbleche und Isolierungen aufweisen, um einen steilen Temperaturgradienten vom Strömungskanal zur Gehäuseaußenwand einzustellen. Zusätzlich kann Kühlluft in die Gehäusestruktur eingebracht werden, um überschüssige Wärme abzuführen.

Aus dem Stand der Technik sind derartige Gehäusestrukturen bereits bekannt, wie beispielsweise aus der GB 2378730 A, die einen Kühlluftkanal unmittelbar im Bereich der inneren Gehäusewand unmittelbar am Strömungskanal zeigt.

Nach der US 6,179,557 B1 wird eine Kühlung in der Weise vorgeschlagen, dass ein seine Richtung ändernder Kühlkanal vorgesehen wird, sodass Kühlluft zunächst in einem ersten äußeren Teil entlang der Strömungsrichtung des Strömungsfluids im Strömungskanal fließt, um anschließend in einer entgegengesetzten Richtung zurück zu fließen und in den Strömungskanal abgegeben zu werden. Weitere Gehäusestrukturen mit Kühlmöglichkeiten sind in der WO 2005/903520 A1, der US 6,902,371 B2 und der EP 1106785 A1 sowie der EP 0 134 186 A1, WO 92/17686 A1, der US 4,242,042 A, der US 4,053,254 und der EP 0 618 349 A1 beschrieben. Bei den zuletzt genannten Druckschriften liegt der Strömungskanal zumindest teilweise an der Außenseite der Gehäusestruktur.

Darüber hinaus beschreibt die Druckschrift EP 0 356 305 A1 eine Gehäusestruktur für eine Strömungsmaschine, bei der eine Wärmeisolierung im Gehäuse angebracht ist. Dies stellt eine Alternative zu den Kühlluftkanälen dar, um durch die Wärmeisolierung den Temperaturgradienten zwischen dem Strömungskanal und der Gehäuseaußenwand zu realisieren.

Allerdings besteht bei den bekannten Gehäusestrukturen mit Kühlluftkanälen das Problem, dass die bekannten Kühlmöglichkeiten lediglich für kurze Gehäuseabschnitte zufriedenstellende Ergebnisse liefern, da bereits in entsprechend kurzen Abschnitten eine sehr starke Erwärmung der Kühlluft auftritt.

### OFFENBARUNG DER ERFINDUNG

### AUFGABE DER ERFINDUNG

Es ist deshalb Aufgabe der vorliegenden Erfindung eine effektive Kühlung für größere Abschnitte einer Gehäusestruktur einer stationären Gasturbine oder eines Flugtriebwerks bereitzustellen, sodass die Kühleffizienz erhöht wird. Gleichzeitig soll die technische Lösung jedoch einfach realisierbar sein.

### TECHNISCHE LÖSUNG

Diese Aufgabe wird gelöst durch eine Gehäusestruktur mit den Merkmalen des Anspruchs 1. Vorteilhafte Ausgestaltungen sind Gegenstand der abhängigen Ansprüche.

Die Erfindung geht aus von der Idee, dass die Kühlluft lediglich in einem äußeren Bereich der Gehäusestruktur Verwendung finden sollte, um die Kühleffizienz zu steigern, da im äußeren Bereich der Gehäusestruktur die Temperaturdifferenz zwischen Kühllufttemperatur und den zu kühlenden Bauteilen geringer ist und somit die Aufheizung der Kühlluft ebenfalls geringer ist. Damit lassen sich mit der Kühlluft längere Abschnitte der Gehäusestruktur kühlen, während in inneren Bereichen der Gehäusestruktur also in Richtung des Strömungskanals Isolierungen und Hitzeschutzbleche für die Einstellung eines Temperaturgradienten eingesetzt werden können.

Entsprechend schlägt die Erfindung für eine Gehäusestruktur für eine Strömungsmaschine vor, zwischen einer inneren, den Strömungskanal begrenzenden Wand und einer äußeren gegenüber der Umgebung abschließenden Wand der Gehäusestruktur einen Kühlluftkanal beabstandet von der inneren Wand vorzusehen. Vorzugsweise kann der Kühlluftkanal benachbart oder anliegend an der äußeren Wand angeordnet sein und mindestens ein Luftleitelement aufweisen, das beispielsweise mit der äußeren Wand den Kühlluftkanal ausbilden kann. Durch das Luftleitelement kann insbesondere sichergestellt werden, dass die Kühlluft im äußeren Bereich der Gehäusestruktur gehalten wird

Darüber hinaus können ausgehend von der inneren Wand in Richtung nach außen ein Hitzeschutzblech und/oder eine Isolierung in dieser Reihenfolge vorgesehen werden, sodass der Kühlluftkanal zwischen der Isolierung und/oder dem Hitzeschutzblech und der radial inneren Seite der äußeren Gehäusewand angeordnet ist. Entsprechend kann der Kühlluftkanal anliegend an die Isolierung und/oder das Hitzeschutzblech ausgebildet sein oder zumindest teilweise durch die Isolierung und/oder das Hitzeschutzblech begrenzt sein. Vorzugsweise kann zwischen Isolierung und/oder Hitzeschutzblech ein Luftleitelement angeordnet sein, das weiterhin die Erwärmung der Kühlluft durch Vermeidung des direkten Kontakts mit der Isolierung und/oder dem Hitzeschutzblech gering halten kann. Dadurch kann der Kühlluftkanal stromabwärts weitere Gehäusebereiche effektiv kühlen. Die Isolierung kann auch durch mehrere radial hintereinander angeordnete Hitzeschilde bzw. Hitzeschutzbleche gebildet sein.

Das Luftleitelement kann als Luftleitblech ausgeführt sein, welches zumindest teilweise, vorzugsweise geschlossen ringförmig umlaufend um den Strömungskanal ausgebildet ist und durch beabstandete Anordnung zur inneren Seite der äußeren Gehäusewand den Kühlluftkanal ausbilden kann. Bei einer vorzugsweise geschlossenen ringförmigen Struktur des Luftleitblechs können auch Gehäusebauteile, die die mechanische Stabilität gewährleisten, wie beispielsweise die äußere Gehäusewand schwächer dimensioniert werden, da das Luftleitblech zur mechanischen Stabilität beiträgt.

Das Luftleitblech ist vorzugsweise anliegend an die Isolierung ausgebildet, wobei das Luftleitblech mit seinem überwiegenden Anteil in unmittelbarem Kontakt zu der Isolierung sein kann. Lediglich Teile des Luftleitblechs können als Abstandshalter radial hervorstehend ausgebildet sein, um das Luftleitblech radial im Abstand von der inneren Seite der äußeren Gehäusewand zu halten.

Nach einer weiteren Ausführungsform kann das Luftleitelement auch in Form eines Rohrelements ausgebildet sein, das insbesondere in einer Aussparung oder einem Schlitz in der Isolierungen angeordnet sein kann oder durch diese gebildet sein kann. Entsprechend können verteilt über den Umfang der Gehäusestruktur mehrere Rohrelemente vorgesehen werden. Die Rohrelemente können unterschiedliche Querschnittsformen, wie Kreis, Rechteck, Quadrat, Sechseck oder dergleichen aufweisen.

Der Kühlluftkanal, der vorzugsweise zwischen Isolierung und radial innerer Seite der äußeren Gehäusewand angeordnet ist, kann im Bereich über einer Laufschaufelstufe ausgebildet sein, wobei die innere Gehäusewand durch eine Dichtungsträgerstruktur gebildet sein kann, die zur Ausbildung eines sogenannten Outer-Air-Seal einen Anstreif- oder Einlaufbelag an der Seite des Strömungskanals aufweisen kann. Der Anstreif- bzw. Einlaufbelag dient zum Kontakt mit Dichtspitzen der Laufschaufeln, sodass in radialer Richtung eine Abdichtung des Strömungskanals gegeben ist und das Strömungsfluid nicht ohne Betätigung der Laufschaufeln an deren radialen Außenseite vorbeiströmen kann.

Der Kühlluftkanal kann ein Eingangsende zum Eintritt der Kühlluft und ein Austrittsende zur Weiterleitung der Kühlluft in benachbarte Gehäusebereiche aufweisen, wobei das Austrittsende so ausgebildet sein kann, dass die Kühlluft zumindest teilweise, vorzugsweise vollständig in Verlängerung der axialen Richtung des Kühlkanals ausströmt. Unter teilweiser Verlängerung der axialen Richtung wird eine Strömungsrichtung verstanden, die zumindest einen Richtungsanteil entlang der axialen Strömungsrichtung im Kühlkanal aufweist, die üblicherweise entlang, vorzugsweise parallel oder nahezu parallel zur Strömungsrichtung des Strömungsfluids im Strömungskanal ist. Entsprechend kann die aus dem Strömungskanal ausgegebene Kühlluft weitere stromabwärts liegende Bereiche des Gehäuses kühlen.

### KURZBESCHREIBUNG DER FIGUREN

Die beigefügten Figuren zeigen in rein schematischer Weise in
- Fig. 1: eine teilweise Querschnittsansicht einer Gehäusestruktur eines Flugtriebwerks;
- Fig. 2: eine teilweise Querschnittsansicht einer zweiten Ausführungsform einer Gehäusestruktur eines Flugtriebwerks.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

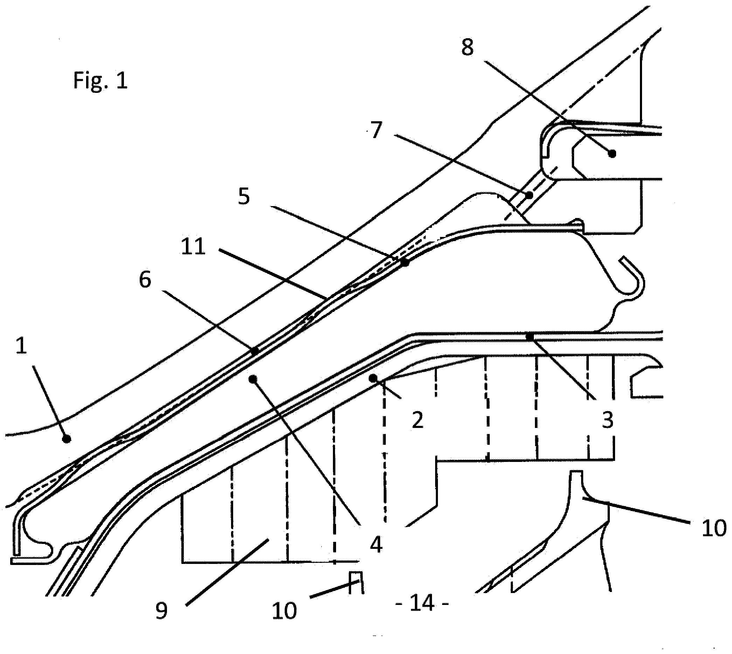

Die Fig. 1 zeigt einen teilweisen Querschnitt durch die Gehäusestruktur eines Flugtriebwerks mit einer äußeren Gehäusewand 1 und einer inneren Gehäusewand 2, die in dem gezeigten Ausführungsbeispiel durch eine Dichtungsträgerstruktur gebildet ist, die auch als Liner-Segment bezeichnet wird. An der Dichtungsträgerstruktur 2 ist ein Einlauf- oder Anstreifbelag 9 aufgebracht, der eine äußere Dichtung, das sogenannte Outer-Air-Seal (OAS) für die sich im Strömungskanal 14 drehenden Laufschaufeln bereitstellt, wobei von den Laufschaufeln in der Fig. 1 lediglich zwei Laufschaufelspitzen 10 gezeigt sind. Die Laufschaufelspitzen 10 kommen während des Betriebs in Kontakt mit dem Einlauf- bzw. Anstreifbelag 9 der Dichtungsträgerstruktur 2 und bilden so mit dem Anstreif- bzw. Einlaufbelag 9 in radialer Richtung die Dichtung aus, sodass Strömungsfluid im Strömungskanal 14 nicht radial außen an den Laufschaufeln vorbei strömen kann, ohne diese angetrieben zu haben.

Die Gehäusestruktur der Fig. 1 weist im Anschluss an den Dichtungsträgerring bzw. die Dichtungsträgerstruktur 2 ein Hitzeschutzschild 3 in Form eines Hitzeschutzbleches auf, welches ähnlich der Dichtungsträgerstruktur den Strömungskanal 14 ringförmig umgibt, wobei eine vollständig geschlossene Ringstruktur oder eine segmentierte Struktur vorgesehen sein kann.

Im Anschluss an das Hitzeschutzblech 3 ist in radialer Richtung nach außen eine Isolierung 4 vorgesehen, die den Wärmetransport nach außen erschweren soll. Die Isolierung 4 wird durch einen geeigneten Isolierstoff gebildet. Alternativ kann die Isolierung 4 durch mehrere radial hintereinander geschaltete Hitzeschutzbleche 3 ersetzt werden.

Im Anschluss und weitgehend anliegend an die Isolierung 4 ist ein Luftleitblech 5 vorgesehen, welches einen Kühlluftkanal 6 in Richtung der Isolierung 4 begrenzt. Das Luftleitblech 5 liegt weitgehend bzw. zu einem überwiegenden Teil an der Isolierung 4 an und weist lediglich in bestimmten Abständen Abstandshalter 11 auf, die das Luftleitblech 5 im Abstand zur äußeren Gehäusewand 1 halten und dadurch dafür sorgen, dass das Luftleitblech 5 und die innere Seite der äußeren Gehäusewand 1 den Kühlluftkanal 6 ausbilden können. Durch das Luftleitblech wird neben der Schaffung des Kühlluftkanals gleichzeitig ein direkter Kontakt der Kühlluft mit der Isolierung 4 und ein undefiniertes Einströmen der Kühlluft in Bereiche zwischen dem Hitzeschutzblech 3 und der Isolierung 4 vermieden. Zudem bietet das Hitzeschutzblech 5, falls es wie im vorliegenden Ausführungsbeispiel als geschlossener Ring ausgebildet ist, einen zusätzlichen Beitrag zur mechanischen Stabilität, sodass andere Komponenten der Gehäusestruktur, wie beispielsweise die äußere Gehäusewand 1, schwächer dimensioniert werden können. Durch den Kühlkanal 6 ist es möglich Kühlluft an der Außenseite der Gehäusestruktur zu halten, sodass eine effektive Kühlung möglich wird und auch in stromabwärts gelegenen Bereichen Kühlluft mit ausreichend niedriger Temperatur zur Verfügung gestellt wird.

Entsprechend ist der Kühlluftkanal 6 so ausgebildet, dass er ein Austrittsende 7 aufweist, welches beispielsweise durch eine Bohrung in der äußeren Gehäusewand 1 realisiert ist, um die Kühlluft im Wesentlichen in Verlängerung der axialen Richtung des Kühlluftkanals 6 an stromabwärts gelegene Bereiche der Gehäusestruktur abzugeben, wie beispielsweise die nachfolgende Leitschaufelstufe, deren Aufhängung 8 in der Fig. 1 zu erkennen ist.

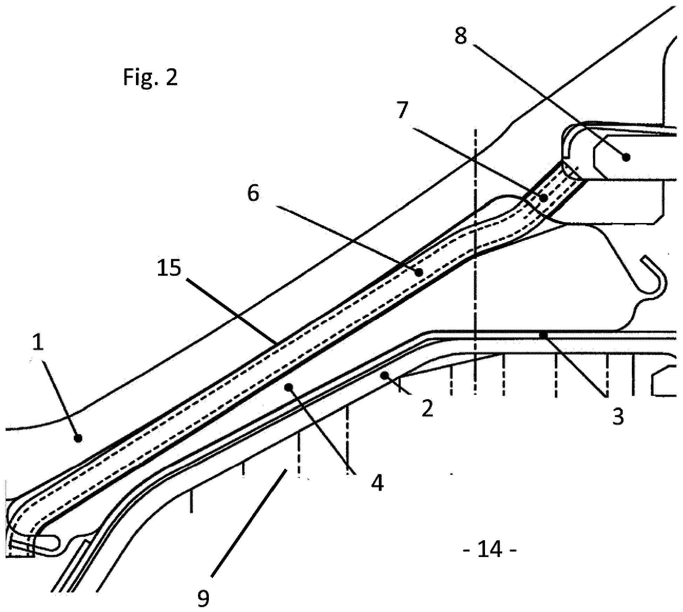

Die Fig. 2 zeigt eine zweite Ausführungsform einer erfindungsgemäßen Gehäusestruktur, bei der wiederum im Bereich einer Laufschaufelstufe die äußere Gehäusewand 1 und die innere Gehäusewand 2 in Form einer Dichtungsträgerstruktur angeordnet sind. Der Einlauf- bzw. Abstreifbelag 9 ist in der Fig. 2 lediglich teilweise dargestellt und die Laufschaufeln bzw. deren Dichtspitzen sind komplett weggelassen.

Auch hier ist wiederum an der radial äußeren Seite der inneren Gehäusewand 2 ein Hitzeschutzblech 3 vorgesehen. Anschließend an das Hitzeschutzblech 3 folgt in radialer Richtung nach außen wiederum eine Isolierung 4. Entgegen der Ausführungsform der Fig. 1 ist jedoch in der Ausführungsform der Fig. 2 kein Luftleitblech vorgesehen, sondern mehrere Kühlkanalröhren 15, die in entsprechenden Aussparungen oder Schlitzen der Isolierung 4 zwischen der Isolierung 4 und der äußeren Gehäusewand 1 angeordnet sind. Die Kanalröhren 15 bilden jeweils einen Teil des Kühlluftkanals 6, wobei beispielsweise das Austrittsende 7 der Kanalröhre 15 in einer entsprechenden Öffnung oder Bohrung der äußeren Gehäusewand 1 aufgenommen ist, um wiederum die austretende Kühlluft in Verlängerung der axialen Richtung des Kanalrohrs 15 auszugeben.

Obwohl anhand der Ausführungsbeispiele die Erfindung detailliert beschrieben worden ist, ist für den Fachmann selbstverständlich, dass die Erfindung nicht auf dieses Ausführungsbeispiel beschränkt ist, sondern dass vielmehr einzelne oder mehrere der vorgestellten Merkmale weggelassen oder andersartig miteinander kombiniert werden können, solange der Schutzbereich der beigefügten Ansprüche nicht verlassen wird. Die vorliegende Offenbarung umfasst insbesondere sämtliche Kombinationen aller vorgestellter Einzelmerkmale.

## Patentansprüche

1. Gehäusestruktur für eine Strömungsmaschine, die einen Strömungskanal (14), in dem Leit- und Laufschaufeln angeordnet sind, zumindest teilweise ringförmig umgibt, wobei die Gehäusestruktur eine innere, den Strömungskanal begrenzende Wand (2) und eine äußere, gegenüber der Umgebung abschließende Wand (I) aufweist, wobei beabstandet von der inneren Wand mindestens ein Kühlluftkanal (6) ausgebildet ist, der mindestens ein Luftleitelement (5,15) aufweist, wobei der Kühlluftkanal die Kühlluft ausschließlich beabstandet zur inneren Wand führt, **dadurch gekennzeichnet, dass** an der radial äußeren Seite der inneren Wand ein Hitzeschutzblech (3) angeordnet ist und zwischen dem Hitzeschutzblech und dem Kühlluftkanal eine Isolierung (4) angeordnet ist.

2. Gehäusestruktur nach Anspruch 1,
**dadurch gekennzeichnet, dass**
zwischen Isolierung (4) und der radial inneren Seite der äußeren Wand (1) mindestens ein Kühlluftkanal (6) ausgebildet ist, der anliegend an die Isolierung mindestens ein Luftleitelement (5,15) aufweist.

3. Gehäusestruktur nach einem der vorhergehenden Ansprüche,
**dadurch gekennzeichnet, dass**
das Luftleitelement als Luftleitblech (5) ausgeführt ist, welches zumindest teilweise, vorzugsweise geschlossen ringförmig umlaufend um den Strömungskanal (14) ausgebildet ist.

4. Gehäsestruktur nach einem der vorhergehenden Ansprüche,
**dadurch gekennzeichnet, dass**
das Luftleitblech (5) Abstandshalter (11) zur radial inneren Seite der äußeren Wand aufweist.

5. Gehäusestruktur nach einem der vorhergehenden Ansprüche,
**dadurch gekennzeichnet, dass**
mehrere Luftleitelemente in Form von Röhrenelementen (15) vorgesehen sind.

6. Gehäusestruktur nach einem der vorhergehenden Ansprüche,
**dadurch gekennzeichnet, dass**
der Kühlluftkanal (6) im Bereich der Laufschaufeln ausgebildet ist.

7. Gehäusestruktur nach einem der vorhergehenden Ansprüche,
**dadurch gekennzeichnet, dass**
der Kühlluftkanal (6) ein Eingangsende zum Eintritt der Kühlluft und ein Austrittsende zur Weiterleitung der Kühlluft in benachbarte Gehäusebereiche aufweist, wobei das Austrittsende (7) so ausgebildet ist, dass die Kühlluft zumindest teilweise, vorzugsweise vollständig in Verlängerung der axialen Richtung strömt.

8. Gehäusestruktur nach einem der vorhergehenden Ansprüche,
**dadurch gekennzeichnet, dass**
mehrere Hitzeschutzbleche radial hintereinander angeordnet sind.

## Claims

1. Housing structure for a turbomachine, which structure annularly surrounds at least in part a flow channel (14) in which guide vanes and rotor blades are arranged, the housing structure having an inner wall (2) that defines the flow channel and an outer wall (1) that seals off the structure with respect to the surroundings, at least one cooling air duct (6) being formed so as to be spaced apart from the inner wall and having at least one air-conducting element (5, 15), the cooling air duct guiding the cooling air so as to be exclusively spaced apart from the inner wall, **characterized in that** a heat protection panel (3) is arranged on the radially outer side of the inner wall and an insulator (4) is arranged between the heat protection panel and the cooling air duct.

2. Housing structure according to claim 1, **characterized in that** at least one cooling air duct (6) is formed between the insulator (4) and the radially inner side of the outer wall (1) and has at least one air-conducting element (5, 15) adjacent to the insulator.

3. Housing structure according to either of the preceding claims, **characterized in that** the air-conducting element is designed as an air-conducting panel (5) which is formed, at least in part, annularly around the flow channel (14) in a preferably closed manner.

4. Housing structure according to any of the preceding claims, **characterized in that** the air-conducting panel (5) has spacers (11) toward the radially inner side of the outer wall.

5. Housing structure according to any of the preceding claims, **characterized in that** a plurality of air-conducting elements are provided in the form of tubular elements (15).

6. Housing structure according to any of the preceding claims, **characterized in that** the cooling air duct (6) is formed in the region of the rotor blades.

7. Housing structure according to any of the preceding claims, **characterized in that** the cooling air duct (6) has an inlet end for entry of the cooling air and an outlet end for passing on the cooling air into adjacent housing regions, the outlet end (7) being designed such that the cooling air flows at least in part, preferably completely, in continuation of the axial direction.

8. Housing structure according to any of the preceding claims, **characterized in that** a plurality of heat protection panels are arranged radially one behind the other.

## Revendications

1. Structure de boîtier pour turbomachine, qui entoure au moins partiellement un canal d'écoulement (14), dans lequel des aubes directrices et des aubes mobiles sont disposées, la structure de boîtier comportant une paroi intérieure (2) délimitant le canal d'écoulement, et une paroi extérieure (1) fermée par rapport à l'environnement, au moins un canal d'air froid (6) étant formé à distance de la paroi intérieure et comportant au moins un élément de guidage d'air (5, 15), le canal d'air froid déplaçant l'air froid exclusivement à distance de la paroi intérieure, **caractérisée en ce qu'**une plaque de protection thermique (3) est disposée sur le côté radialement extérieur de la paroi intérieure et un isolant (4) est disposé entre la plaque de protection thermique et le canal d'air froid.

2. Structure de boîtier selon la revendication 1, **caractérisée en ce qu'**au moins un canal d'air froid (6) est formé entre l'isolant (4) et le côté radialement intérieur de la paroi extérieure (1), lequel canal comporte au moins un élément de guidage d'air (5, 15) adjacent à l'isolant.

3. Structure de boîtier selon l'une des revendications précédentes, **caractérisée en ce que** l'élément de guidage d'air est conçu comme une plaque de guidage d'air (5) qui est conçue de manière au moins partiellement annulaire, de préférence sous forme d'anneau fermé autour du canal d'écoulement (14).

4. Structure de boîtier selon l'une des revendications précédentes, **caractérisée en ce que** la plaque de guidage d'air (5) comporte des entretoises (11) sur le côté radialement intérieur de la paroi extérieure.

5. Structure de boîtier selon l'une des revendications précédentes, **caractérisée en ce que** plusieurs éléments de guidage d'air sont prévus sous forme d'éléments tubulaires (15).

6. Structure de boîtier selon l'une des revendications précédentes, **caractérisée en ce que** le canal d'air froid (6) est formé dans la région des aubes rotatives.

7. Structure de boîtier selon l'une des revendications précédentes, **caractérisée en ce que** le canal d'air froid (6) comporte une extrémité d'entrée pour l'entrée de l'air froid et une extrémité de sortie pour la transmission de l'air froid dans des régions de boîtier adjacentes, l'extrémité de sortie (7) étant formée de sorte que l'air froid s'écoule au moins partiellement, de préférence complètement, dans le prolongement de la direction axiale.

8. Structure de boîtier selon l'une des revendications précédentes, **caractérisée en ce que** plusieurs plaques de protection thermique sont disposées radialement les unes derrière les autres.
